# EUROPÄISCHE PATENTANMELDUNG

(11) **EP 3 290 107 A1**
(43) Veröffentlichungstag der Anmeldung: **07.03.2018**
(21) Anmeldenummer: 16001911.3
(22) Anmeldetag: 01.09.2016
(51) Int. Cl.: B01J 19/32

(54) **PACKUNG, PACKUNGSANORDNUNG UND KOLONNE ZUM STOFF- UND/ ODER ENERGIEAUSTAUSCH ZWISCHEN EINER FLÜSSIGEN UND EINER GASFÖRMIGEN PHASE UND HERSTELLUNGSVERFAHREN FÜR EINE PACKUNG**

(71) Anmelder: Linde Aktiengesellschaft, 80331 München (DE)
(72) Erfinder: Matten, Christian, 82049 Pullach (DE); Kerber, Christiane, 82343 Pöcking (DE); Bauer, Ludwig, 85114 Buxheim (DE); Hoffmann, Rainer, 82008 Unterhaching (DE); Acher, Thomas, 81379 München (DE); Hill, Simon, 81679 München (DE)
(74) Vertreter: Meilinger, Claudia Sabine

(57) **Zusammenfassung**

Die Erfindung betrifft eine Packung (10) aufweisend eine Mehrzahl von parallel angeordneten Materiallagen (11), wobei die Materiallagen (11) eine Mehrzahl von Bergen (12) und Tälern (13) aufweisen, wobei jeweils ein Berg (12) mit einem benachbarten Tal (13) über eine Flanke (14) verbunden ist, wobei die Packung (10) dazu ausgebildet ist, derart in einer Kolonne (23) angeordnet zu werden, dass die Packungsachse (I_{P}) entlang einer Kolonnenachse (a) verläuft, und wobei die Oberflächen der Materiallagen (11) eine Sekundärstruktur (16) aus Vertiefungen und/oder Erhebungen aufweisen, wobei die Materiallagen (11) durch 3D-Drucken gebildet sind, wobei die Berge (12), die Täler (13) und die Sekundärstruktur (16) durch das 3D-Drucken gebildet sind.

Die Erfindung betrifft weiterhin eine Packungsanordnung (1), eine Kolonne (23), ein Verfahren zur Herstellung einer Packung (10) mittels 3D-Druck und ein Verfahren zum Stoffaustausch zwischen einer flüssigen und einer gasförmigen Phase.

## Beschreibung

Die Erfindung betrifft eine Packung, eine Packungsanordnung und eine Kolonne zum Stoff- und/ oder Energieaustausch zwischen einer flüssigen und einer gasförmigen Phase sowie ein Verfahren zur Herstellung einer Packung und ein Verfahren zum Stoffaustausch zwischen einer flüssigen und einer gasförmigen Phase.

Aus dem Stand der Technik sind Kolonnen (Säulen) mit Packungen bekannt, bei denen eine gasförmige Phase in einer strukturierten Packung aufsteigt, wobei im Gegenstrom eine flüssige Phase auf die Packung aufgegeben wird, die in intensiven Kontakt, insbesondere zum Stoff- und/oder Energieaustausch mit der gasförmigen Phase gebracht werden soll.

Derartige Packungen bestehen aus einer strukturierten Anordnung von mehreren Materiallagen (z.B. Blechen). Diese Materiallagen weisen nach dem Stand der Technik häufig ein primäres Faltungsmuster (mit einem definierten Faltungswinkel, auch als Wellenwinkel bezeichnet) aus (Wellen-)bergen und (Wellen-)tälern sowie eine Sekundärstruktur aus Rillen oder Erhebungen auf.

Packungen nach dem Stand der Technik weisen eine Reihe von Nachteilen auf. So sind insbesondere bei komplizierten Rektifikationsverfahren die erforderlichen Fertigungs- und Einbautoleranzen bei der Dimensionierung und Beabstandung der Materiallagen in den Packungen sehr gering. Abweichungen von diesen Toleranzen haben eine Verminderung der Trennwirksamkeit der entsprechenden Kolonne zur Folge, insbesondere bei einer Abweichung der Packungsmerkmale Neigungswinkel, Lückenvolumen und spezifische Oberfläche von den erforderlichen Toleranzen. Diese Toleranzen sind bei nach Stand der Technik mittels Blechprägung hergestellten Packungen nur äußerst schwierig erreichbar.

Weiterhin ergibt sich bei Packungen nach dem Stand der Technik der Nachteil, dass an denjenigen Packungsblechen, welche die Kolonnenwand berühren, die Flüssigkeit über die Kanäle an die Wand gefördert wird, aber nicht mehr zurück in den gegenüberliegenden, nach unten verlaufenden Kanal gelangt, sondern den kürzesten Weg nach unten, d.h. entlang der Kolonnenwand, fließt. Dies führt zu starken Trennwirksamkeitsverlusten der Kolonne.

Ein weiteres Problem ergibt sich durch Bildung von Bereichen mit Zwickelflüssigkeit an Stellen, an denen sich Wellenberge der Materiallagen der Packungen berühren. An diesen Stellen stagniert die Flüssigkeit und befindet sich damit im Zustand der Gleichgewichtssättigung, so dass kein weiterer Stoffaustausch mehr stattfinden kann. Dies hat den Nachteil, dass Stoffaustauschfläche (auf Kosten der Trennwirksamkeit) und Lückenvolumen (auf Kosten der Kapazität) verlegt wird.

Bei Packungen nach dem Stand der Technik treten weiterhin innerhalb der Lagen formmäßige Inhomogenitäten der Kanäle auf. Dies führt zu unterschiedlichen Druckverlusten pro Lage. Sind zudem Öffnungen in den Materiallagen vorhanden, stellen sich aufgrund von Querströmungen durch die Löcher unterschiedliche Gas-Volumenströme und damit unterschiedliche lokale Rücklaufverhältnisse ein, was eine verminderte Trennwirksamkeit zur Folge hat.

Weiterhin stauen Packungen nach dem Stand der Technik an den Stoßstellen zwischen den Lagen (d.h. an den Stellen, an denen die Kanäle in den Packungen ihre Orientierung ändern). Die Ursache dafür ist der erhöhte Druckverlust, der entsteht, wenn das Gas in die nächste Lage umgelenkt wird. Außerdem sammelt sich Flüssigkeit an diesen Stoßstellen und verengt den Querschnitt. Wenn die Packungen nicht überall homogen aufliegen, kann zudem Flüssigkeit an den unteren Kanten der Bleche aufgrund von Adhäsionskräften entlanglaufen und eine inhomogene Verteilung ausbilden, was starke Wirksamkeitsverluste zur Folge hat. Hierfür reichen Spalte von wenigen Zehntelmillimetern aus.

Nach dem Stand der Technik bekannte Strukturen auf der Packungsoberfläche (Sekundärstrukturen) erhöhen die Packungswirksamkeit. Bekannte Strukturen bestehen z.B. aus Rillen oder Rauten und werden in einem gesonderten Arbeitsgang, insbesondere vor dem Prägen der Wellenstruktur (Primärstruktur), auf das Packungsblech aufgebracht. Beim Prägen der Primärstruktur kann die Sekundärstruktur teilweise wieder zunichte gemacht werden, insbesondere an den Stellen erhöhten Tiefziehens. Dies führt zu unregelmäßigen Sekundärstrukturen, was eine Begrenzung der Ausprägung der Sekundärstruktur (Höhe und Tiefe der Rillen/Rauten etc.) zur Folge hat, da insbesondere große Strukturen beim Prägen beseitigt werden.

Durchgangslöcher werden nach dem Stand der Technik in die Materiallagen eingebracht, um die Gasströmung zwischen diesen zu vergleichmäßigen, und dienen als Hindernisse für die Flüssigkeitsströmung, welche sich aufteilt, wenn sie auf ein Durchgangsloch trifft. Dies führt zu einer verbreiterten Flüssigkeitsströmung und zu einer gleichmäßigeren Ausnutzung der Packung. Nach dem Stand der Technik werden die Durchgangslöcher gleichmäßig an der gesamten Oberfläche der Materiallagen positioniert. Es ist jedoch bekannt, dass der überwiegende Teil der Flüssigkeit an den Tälern der Primärstruktur strömt.

Infolgedessen ergibt sich das Problem, eine Packung zur Verfügung zu stellen, welche im Hinblick auf die vorgenannten Nachteile des Standes der Technik verbessert ist.

Diese Aufgabe wird durch die Packung nach Anspruch 1, die Packungsanordnung nach Anspruch 14, die Kolonne nach Anspruch 15, das Herstellungsverfahren nach Anspruch 16 und das Verfahren zum Stoff- und/ oder Energieaustausch nach Anspruch 17 gelöst. Vorteilhafte Ausgestaltungen der Packung ergeben sich aus den Unteransprüchen 2 bis 13. Diese werden im Folgenden beschrieben. Die Merkmale der Ansprüche können in jeglicher technisch sinnvollen Art und Weise kombiniert werden, wobei hierzu auch die Erläuterungen aus der nachfolgenden Beschreibung sowie Merkmale aus den Figuren hinzugezogen werden können, die ergänzende Ausgestaltungen der Erfindung umfassen.

Ein erster Aspekt der Erfindung betrifft eine Packung aufweisend eine Mehrzahl von parallel angeordneten Materiallagen, die sich jeweils entlang einer ersten Ebene erstrecken, wobei die Packung eine Packungsachse und eine senkrecht zu der Packungsachse angeordnete Packungsquerschnittsebene aufweist, und wobei die Materiallagen derart angeordnet sind, dass die ersten Ebenen, entlang derer sich die Materiallagen erstrecken, jeweils parallel zu der Packungsachse angeordnet sind, oder eine Neigung bezüglich der Packungsquerschnittsebene aufweisen, und wobei die jeweilige Materiallage eine Mehrzahl von alternierend angeordneten Bergen und Tälern aufweist, wobei jeweils ein Berg mit einem benachbarten Tal über eine Flanke verbunden ist, und wobei die Berge und Täler jeweils entlang einer Längserstreckungsrichtung verlaufen, und wobei die Packung eine parallel zu der Packungsquerschnittsebene und senkrecht zu der Längserstreckungsrichtung verlaufende Packungsbreite aufweist, und wobei die Packung eine in der Packungsquerschnittsebene angeordnete Stirnfläche aufweist, welche die Packung einseitig abschließt, und wobei die Packung dazu ausgebildet ist, derart in einer Kolonne zum Stoff- und oder Energieaustausch zwischen einer flüssigen Phase und einer gasförmigen Phase angeordnet zu werden, dass die Packungsachse entlang einer Kolonnenachse verläuft, und wobei die Oberflächen der Materiallagen eine Sekundärstruktur aus Vertiefungen und/ oder Erhebungen aufweisen, wobei die Materiallagen durch 3D-Drucken gebildet sind, und wobei die Berge, die Täler und die Sekundärstruktur durch das 3D-Drucken gebildet sind.

Dabei sind die Berge bzw. Täler gebogene bzw. gekrümmte Bereiche der Materiallagen, welche insbesondere die größte Krümmung der jeweiligen Materiallage aufweisen. Die Flanken sind insbesondere ebene oder im Wesentlichen ebene Bereiche der Materiallagen, die jeweils einen Berg mit einem Tal verbinden. Die Flanken können insbesondere auch eine Krümmung aufweisen, wobei insbesondere die Krümmungen der jeweiligen Flanken (falls vorhanden) kleiner sind als die größte Krümmung der Berge bzw. Täler.

Die Materiallagen weisen eine Sekundärstruktur auf. Das heißt, die Oberfläche der Materiallagen ist nicht vollständig glatt, sondern weist zusätzlich zu der durch die Berge und Täler gebildeten Primärstruktur eine, insbesondere regelmäßige, Strukturierung auf. Diese Strukturierung kann z.B. durch Aussparungen oder Erhebungen ausgebildet sein. Die Aussparungen können z.B. als Kerben oder Rillen ausgeformt sein.

Durch die Herstellung mittels 3D-Druck können vorteilhafterweise nahezu beliebig dimensionierte Materiallagen in einem Herstellungsschritt gedruckt werden. Dadurch lassen sich insbesondere die Fertigungstoleranzen der Materiallagen im Vergleich zum Stand der Technik verbessern. Zudem lassen sich beliebige Sekundärstrukturen erzeugen, welche unabhängig von der gewählten Primärstruktur sind.

Gemäß einer Ausführungsform ist die Sekundärstruktur durch eine mittels des 3D-Drucks erzeugte Rauigkeit oder Unebenheit der Oberfläche der Materiallagen ausgebildet.

Solche rauen Oberflächen fördern den Stoffaustausch zwischen flüssiger und gasförmiger Phase.

Gemäß einer weiteren Ausführungsform ist die Sekundärstruktur durch Leitrinnen in Form eines Fischgrätmusters ausgebildet, wobei die Spitzen der Dreiecke des Fischgrätmusters an den Tälern angeordnet sind.

Dies verbessert das Spreiten der Flüssigkeit über die gesamte Welle, wodurch die Fläche der Packung besser ausgenutzt wird.

Gemäß einer weiteren Ausführungsform weist die jeweilige Materiallage eine Mehrzahl von über die Materiallage verteilten Durchgangsöffnungen auf, wobei die Durchgangsöffnungen durch das 3D-Drucken gebildet sind.

Gemäß einer weiteren Ausführungsform ist die jeweilige Materiallage mittels des 3D-Druckens als eine einstückige Einheit schichtweise aus einem pulverförmigen Werkstoff, insbesondere Aluminium (auch Aluminiumlegierung), oder aus einem geschmolzenen Werkstoff, insbesondere einem Kunststoff, gebildet, wobei nacheinander mehrere Schichten des Werkstoffs übereinander aufgebracht sind, wobei jede Schicht vor dem Aufbringen der nächstfolgenden Schicht mittels eines Laserstrahls in einem vordefinierten Bereich, der einem Querschnittsbereich der herzustellenden Einheit entspricht, erhitzt ist und dabei an der darunterliegenden Schicht fixiert ist, insbesondere mit dieser verschmolzen ist.

Die Materiallage kann dabei insbesondere durch bekannte 3D-Druckverfahren wie z.B. Selective Laser Sintering (SLS), Electron Beam Melting/ Electron Beam Additive Manufacturing (EBM/EBAM), Fused Filament Fabrication (FFF), Schmelzschichtung (z.B. Fused Deposition Modeling, FDM), Stereolithographie (STL, SLA), Digital Light Processing (DLP), Multi Jet Modeling (MJM), Polyjet-Verfahren, Film Transfer Imaging (FTI), Laserauftragsschweißen oder Laminated Object Modeling (LOM) gedruckt werden.

Der 3D-Druck kann z.B. bei Kunststoffpackungen insbesondere mittels geschmolzener Materialien Naht für Naht erfolgen.

Gemäß einer weiteren Ausführungsform weist ein zwischen der Längserstreckungsrichtung der Berge und Täler und der Packungsachse gebildeter Neigungswinkel eine maximale Abweichung von 0,2°, insbesondere 0,1° von einem Sollwert auf, wobei der Sollwert insbesondere 45°beträgt.

Gemäß einer weiteren Ausführungsform weist die Dicke der Materiallagen innerhalb der Packung eine maximale Abweichung von 0,22 %, insbesondere 0,11 % auf.

Gemäß einer weiteren Ausführungsform weist das Lückenvolumen (definiert als Quotient zwischen dem Hohlraumvolumen und dem Gesamtvolumen, auch als Porosität bezeichnet) der Packung eine maximale Abweichung von 0,22 %, insbesondere 0,11 %, von einem Sollwert auf, wobei der Sollwert insbesondere 95% bis 98% beträgt.

Gemäß einer weiteren Ausführungsform weist die spezifische Oberfläche der Packung (Summe aller Grenzflächen zwischen fester Phase und gasförmiger/flüssiger Phase) eine maximale Abweichung von 1 %, insbesondere 0,5 %, von einem Sollwert auf, wobei der Sollwert insbesondere 200 m²/m³ bis 1200 m²/m³ beträgt. Der Sollwert kann z.B. 750 m²/m³, 250m²/m³, 350m²/m³, 500m²/m³ oder 1100m²/m³ betragen.

Gemäß einer weiteren Ausführungsform ist die Packung durch 3D-Drucken einer Mehrzahl stoffschlüssig miteinander verbundener Materiallagen gebildet, wobei die Materiallagen insbesondere mittels mindestens eines Abstandsstegs verbunden sind.

Gemäß einer weiteren Ausführungsform weist der Abstand der Materiallagen entlang der gemeinsamen Flächennormalen der ersten Ebenen, in denen die Materiallagen erstreckt sind, eine maximale Abweichung von 1 % auf.

Bei einer Unterschreitung dieser Toleranzwerte ergibt sich eine besonders homogene Verteilung der Phasen und damit eine erhöhte Packungswirksamkeit.

Gemäß einer weiteren Ausführungsform sind die Materiallagen derart angeordnet, dass die Berge und Täler der benachbarten Materiallagen jeweils in senkrecht zu den ersten Ebenen angeordneten zweiten Ebenen angeordnet sind.

Hierdurch ergeben sich in den einzelnen Ebenen (parallel zur Packungsquerschnittsebene) homogen strukturierte Zwischenräume und somit eine homogenere Flüssigkeits- bzw. Gasverteilung.

Gemäß einer weiteren Ausführungsform liegen die Berge benachbarter Materiallagen aneinander an, so dass die Packung zwischen den benachbarten Materiallagen in der Längserstreckungsrichtung (also in Richtung der Erstreckung der Berge und Täler) verlaufende Aussparungen aufweist, und wobei die Stirnfläche eine Mehrzahl von Öffnungen der besagten Aussparungen aufweist.

Gemäß einer weiteren Ausführungsform weisen die Materiallagen jeweils mindestens eine Durchgangsöffnung auf, wobei die mindestens eine Durchgangsöffnung an einem Berg angeordnet ist.

Solche Durchgangsöffnungen verhindern, dass sich an Stellen, an denen sich Berge berühren, Zwickelflüssigkeit bildet, bzw. erlauben ein Ablaufen der Zwickelflüssigkeit.

Gemäß einer weiteren Ausführungsform weisen die Materiallagen jeweils mindestens einen Abstandssteg auf, wobei benachbarte Materiallagen mittels des Abstandsstegs verbunden sind, und wobei der mindestens eine Abstandssteg an einem Berg angeordnet ist.

Diese Abstandsstege verhindern, dass sich an Stellen, an denen sich Berge berühren, Zwickelflüssigkeit bildet, bzw. erlauben ein Ablaufen der Zwickelflüssigkeit.

Gemäß einer weiteren Ausführungsform weist der mindestens eine Abstandssteg eine Stegneigung in Bezug auf die Packungsquerschnittsebene auf.

Eine solche Stegneigung bewirkt, dass die Flüssigkeit wieder zur Wand (insbesondere wieder zur Flanke) der Materiallage gefördert wird.

Gemäß einer weiteren Ausführungsform weisen die Materiallagen an jeweils mindestens einem Berg eine Mehrzahl von ersten Abstandsstegen und eine Mehrzahl von zweiten Abstandsstegen aufweisen, wobei die ersten Abstandsstege und die zweiten Abstandsstege abwechselnd entlang des mindestens einen Berges angeordnet sind, und wobei die ersten Abstandsstege in Bezug auf die Packungsquerschnittsebene abwärts geneigt sind, und wobei die zweiten Abstandsstege in Bezug auf die Packungsquerschnittsebene aufwärts geneigt sind. Dabei beziehen sich die Begriffe "aufwärts" und "abwärts" auf den Fall, dass die Packung in einer bestimmungsgemäß aufgestellten Kolonne angeordnet ist, wobei die Kolonnenachse der Kolonne in horizontaler Richtung verläuft.

Eine solche Anordnung bewirkt, dass die Flüssigkeit wieder zur Wand (insbesondere wieder zur Flanke) der Materiallage gefördert wird.

Gemäß einer weiteren Ausführungsform weist die Packung an mindestens einer Stirnfläche einen Anschlussabschnitt auf, der einen Teilabschnitt der besagten Aussparungen aufweist, und der die besagten Öffnungen aufweist, wobei der Querschnitt der Aussparungen in dem Anschlussabschnitt erweitert ist.

Hierdurch lässt sich vorteilhafterweise eine gerundete Umlenkung zwischen den Aussparungen (Kanälen) benachbarter Packungen (Stoßstellen) ausbilden.

Ein zweiter Aspekt der Erfindung betrifft eine Packungsanordnung aufweisend mindestens eine erste Packung nach dem ersten Aspekt der Erfindung und eine zweite Packung nach dem ersten Aspekt der Erfindung, wobei die Öffnungen der Stirnfläche der ersten Packung mit den Öffnungen der Stirnfläche der zweiten Packung überlappen, insbesondere zur Deckung gebracht sind, und wobei die Stirnflächen der ersten und zweiten Packung derart aneinander anliegen, dass die Richtung der Packungsbreite der ersten Packung senkrecht zu der Richtung der Packungsbreite der zweiten Packung angeordnet ist.

Dies erlaubt vorteilhafterweise die Verbindung der Aussparungen benachbarter Packungen und somit ein vermindertes Stauen an den Stoßstellen.

Ein dritter Aspekt der Erfindung betrifft eine Kolonne zum Stoff- und oder Energieaustausch zwischen einer flüssigen Phase und einer gasförmigen Phase aufweisend mindestens eine Packung nach dem ersten Aspekt der Erfindung, wobei die Kolonne eine Kolonnenachse aufweist, und wobei die Kolonne weiterhin einen Mantel aufweist, der einen Mantelraum ausbildet, in dem die mindestens eine Packung angeordnet ist, und wobei der Mantel eine Wandung aufweist, die an der dem Mantelraum zugewandten Seite eine 3D-gedruckte Wandungsstruktur, insbesondere einen Randabweiser, aufweist, die dazu ausgebildet ist, die flüssige Phase von der Wandung zu der mindestens einen Packung zu leiten. Die 3D-gedruckte Wandungsstruktur kann insbesondere eine Rille oder ein Steg sein.

Insbesondere kann auch die gesamte Kolonne mit den Packungen mittels 3D-Druck hergestellt sein.

Hierdurch kann die Flüssigkeit von der herabkommenden, zur Wand fließenden Welle zu der benachbarten oder darunter liegenden, von der Wand nach unten geleiteten Welle hin, geleitet werden. Dies verhindert ein Entlangfließen der Flüssigkeit an der Wandung nach unten an der Packungsanordnung vorbei und erhöht die Trennwirksamkeit.

Dabei können die Materiallagen insbesondere einzeln in der Kolonne angeordnet sein, wobei sie lediglich über die Kolonne (z.B. die Wandung) miteinander verbunden sind. Alternativ dazu können die Materiallagen zumindest ein Packungspaket bilden, wobei die Materiallagen in dem Packungspaket mechanisch miteinander verbunden sind. Es ist insbesondere auch denkbar, dass in der Kolonne sowohl einzelne Materiallagen als auch mindestens ein Packungspaket angeordnet sind.

Ein vierter Aspekt der Erfindung betrifft ein Verfahren zur Herstellung einer Packung nach dem ersten Aspekt der Erfindung, wobei die Materiallagen mittels eines 3D-Druckverfahrens gedruckt werden, und wobei die Berge, die Täler und die Sekundärstruktur mittels des 3D-Druckverfahrens gedruckt werden.

Ein fünfter Aspekt der Erfindung betrifft ein Verfahren zum Stoff- und/ oder Energieaustausch zwischen einer flüssigen Phase und einer gasförmigen Phase, insbesondere mittels einer Kolonne nach dem dritten Aspekt der Erfindung, wobei die flüssige Phase und die gasförmige Phase im Gegenstrom durch mindestens eine Packung nach dem ersten Aspekt der Erfindung geleitet werden, und wobei die mindestens eine Packung insbesondere Teil einer Packungsanordnung nach dem zweiten Aspekt der Erfindung ist.

Weitere Einzelheiten und Vorteile der Erfindung werden durch die nachfolgende Beschreibung von Ausführungsbeispielen an Hand von Figuren erläutert. Es zeigen:
- Fig. 1: eine schematische Darstellung einer Materiallage einer erfindungsgemäßen Packung,
- Fig. 2: eine Anordnung einer Materiallage in einer erfindungsgemäßen Packung,
- Fig. 3: eine Seitenansicht einer erfindungsgemäßen Packung,
- Fig. 4: eine perspektivische Teilansicht einer Wandung einer Kolonne mit Randabweisern und einer Packung,
- Fig. 5: eine Schnittansicht und eine Draufsicht einer erfindungsgemäßen Packung mit Abstandsstegen,
- Fig. 6: eine Draufsicht und verschiedene Schnittdarstellungen einer erfindungsgemäßen Packung,
- Fig. 7: eine perspektivische Teilansicht einer Verbindung zwischen zwei Packungen einer Packungsanordnung,
- Fig. 8: eine Kolonne mit einer erfindungsgemäßen Packung.

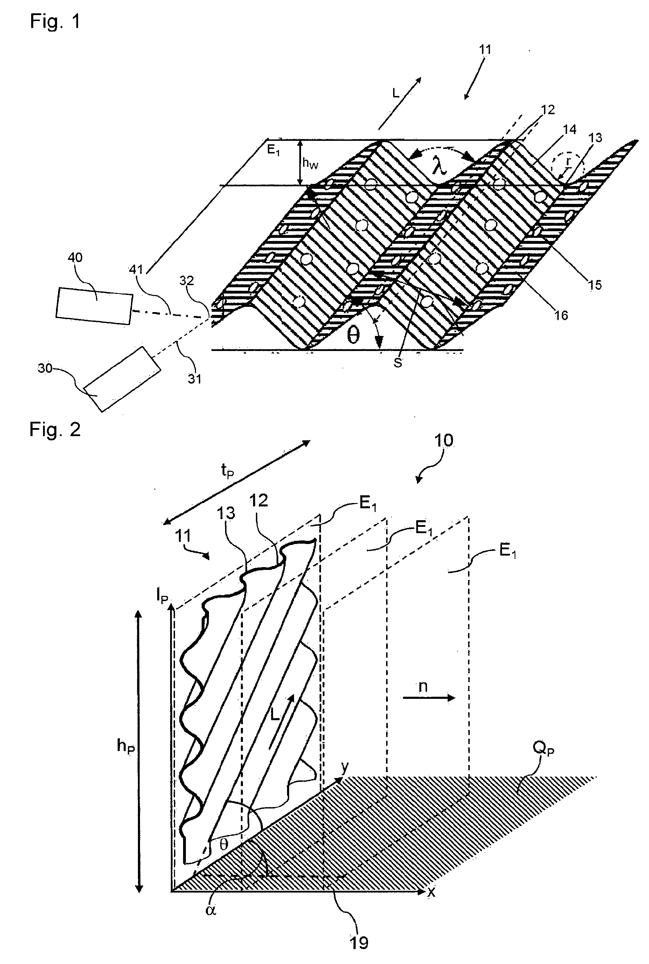

Im Einzelnen zeigt die Figur 1 eine perspektivische Teilansicht einer Materiallage 11, z.B. aus einem gefalteten Blech, die in einer Ebene E₁ erstreckt ist. Die Materiallage 11 weist eine Primärstruktur aus Bergen 12 und Tälern 13 auf, wobei die Berge 12 jeweils mittels Flanken 14 mit benachbarten Tälern 13 verbunden sind.

Dabei sind die Berge 12 bzw. Täler 13 gebogene bzw. gekrümmte Bereiche der Materiallagen 11, welche insbesondere die größte Krümmung der jeweiligen Materiallage 11 aufweisen. Die Flanken 14 sind insbesondere ebene oder im Wesentlichen ebene Bereiche der Materiallagen 11, die jeweils einen Berg 12 mit einem Tal 13 verbinden. Die Flanken 14 können insbesondere auch eine Krümmung aufweisen, wobei insbesondere die Krümmungen der jeweiligen Flanken 14 (falls vorhanden) kleiner sind als die größte Krümmung der Berge 12 bzw. Täler 13.

Eine Begrenzung zwischen einem Berg 12 und den angrenzenden Flanken 14 ist in der Figur 1 beispielhaft durch gestrichelte Linien skizziert.

Die Berge 12 und Täler 13 erstrecken sich dabei parallel zueinander in einer Längserstreckungsrichtung L und können jeweils einen Krümmungsradius r aufweisen. Die durch die Berge 12, Täler 13 und Flanken gebildeten Wellen weisen jeweils eine Wellenlänge s und eine Wellenhöhe h_{w} auf, wobei die Wellenlänge s senkrecht zur Längserstreckungsrichtung L entlang einer ersten Ebene E₁ verläuft, in der die jeweilige Materiallage 11 erstreckt ist, und wobei die Wellenhöhe h_{w} senkrecht zu der ersten Ebene E₁ verläuft. Wenn die erste Ebene E₁ parallel zu einer Horizontalen angeordnet ist, verläuft die Längserstreckungsrichtung Lder Berge 12 und Täler 13 insbesondere unter einem Neigungswinkel θ zu der Horizontalen, wobei der Neigungswinkel θ insbesondere 45° beträgt.

Benachbarte Flanken 14 weisen insbesondere an einem Tal 13 zueinander einen Wellenwinkel λ auf. Die Materiallage 11 weist weiterhin eine Mehrzahl von Durchgangsöffnungen 15 auf und eine Sekundärstruktur 16 auf wobei die Sekundärstruktur 16 insbesondere aus Rillen ausgebildet ist, die quer zur Längserstreckungsrichtung L verlaufen.

In der Figur 1 ist die Materiallage 11 in einem teilweise fertiggestellten Zustand während des 3D-Druckens gezeigt. Figur 1 zeigt außerdem eine Laserquelle 30 zur Erzeugung eines Laserstrahls 31 und eine Stoffzuführung 40 zur Zuführung eines Werkstoffs 41. Die Laserquelle 30 und die Stoffzuführung 40 sind derart zu der teilweise fertiggestellten Materiallage 11 ausgerichtet, dass der Werkstoff 41 an einer Druckposition 32 auf die teilweise fertiggestellte Materiallage 11 aufgebracht werden kann, und die Laserquelle 30 ist derart ausgerichtet, dass der Laserstrahl 31 auf die Druckposition 32 gerichtet ist, so dass der Werkstoff 41 mittels des Laserstrahls 31 geschmolzen wird und der Werkstoff 41 auf die Materiallage 11 aufgebracht wird. Durch Bewegung der teilweise fertig gestellten Materiallage 11 relativ zu der Laserquelle 30 und der Stoffzuführung 40 kann schichtweise die Struktur der Materiallage 11 erweitert werden, so dass die fertige Materiallage 11 vollständig gedruckt wird. Dabei kann die Materiallage 11 z.B. schichtweise in Richtung der Wellenhöhe h_{w}, in Richtung der Wellenlänge S oder in der Längserstreckungsrichtung L gedruckt werden.

Durch den 3D-Druck können Materiallagen 11, Packungen 10 bzw. Packungsanordnungen 1 sowie ganze Kolonnen 23 zusammen mit den entsprechenden Packungen 10 gedruckt werden, die deutlich weniger fertigungsbedingte Einschränkungen aufweisen als die entsprechenden Erzeugnisse des Standes der Technik. Dabei könnten geometrisch bisher nicht bekannte Optima gefunden werden, die nicht in konkretem Bezug zu den genannten geometrischen Einschränkungen stehen.

Insbesondere können die Packungen 10 mittels der 3D-Druck-Technik derart ausgeführt sein, dass die Form und/ oder der Abstand der Berge 12 und Täler 13 (insbesondere die Wellenlänge) eine geringere Abweichung im Vergleich zum Stand der Technik (begrenzt durch die beim 3D-Druck erreichbaren Toleranzen) aufweisen.

Weiterhin können die Packungsanordnungen 1 so ausgeführt sein, dass alle gewellten Bleche (im Rahmen der im 3D-Druck erreichbaren Toleranz) denn gleichen Abstand zueinander aufweisen. Dort, wo Wellenberge einander am nächsten kommen, ist insbesondere stets der gleiche Abstand.

Mittels des 3D-Drucks wird erfindungsgemäß die Primärstruktur aus Bergen 12 und Tälern 13 und die Sekundärstruktur 16 (z.B. in Form von Rillen oder Erhebungen) in einem Schritt gedruckt. Z.B. kann mittels des 3D-Drucks eine raue Oberfläche der Materiallagen 11 erzeugt werden. Solche Rauigkeiten und Unebenheiten fördern den Stoffaustausch zwischen flüssiger Phase F und gasförmiger Phase G.

Weiterhin kann mit Hilfe des 3D-Drucks insbesondere eine Sekundärstruktur 16 erzeugt werden, die Leitrinnen in Fischgrätmusterform in die Flanken 14 der Materiallagen 11 legt, wobei die Spitze des Dreiecks der Fischgrätenmuster mittig im Wellental liegt. Dadurch spreitet die Flüssigkeit über die gesamte Flanke 14 und nutzt die Fläche der Packung 10 besser aus.

Insbesondere werden auch die Durchgangslöcher 15 der Materiallagen 11 mittels 3D-Druck erzeugt. Dabei können insbesondere die Durchgangslöcher 15 nur oder in höherer Dichte in den Tälern 13 der Primärstruktur angebracht werden, wo sie eine maximale Spreitung der Flüssigkeit erzeugen.

Wenn die jeweilige Materiallage 11 vollständig gedruckt ist, kann diese insbesondere mit weiteren Materiallagen 11 zu einer Packung 10 zusammengesetzt werden. Alternativ dazu kann auch eine gesamte erfindungsgemäße Packung 10 aus mehreren Materiallagen 11 oder sogar eine Packungsanordnung 1 aus mehreren Packungen 10 in einem Stück gedruckt werden, wobei insbesondere Verbindungen zwischen den Materiallagen 11 gedruckt werden.

Die Figur 2 zeigt eine beispielhafte perspektivische Darstellung einer Materiallage 11 in einer Packung 10 mit einer Packungsquerschnittsebene P_{Q}, die von der x-Achse x und der y-Achse y aufgespannt wird. Die Materiallage 11 ist in einer ersten Ebene E₁ mit einer Flächennormalen n erstreckt. Eine erfindungsgemäße Packung 10 weist mehrere in Bezug auf die erste Ebene E₁ parallel angeordnete Materiallagen 11 auf. Zur besseren Übersicht sind mögliche Orientierungen von zwei weiteren Materiallagen 11 nur durch die entsprechenden ersten Ebenen E₁ angedeutet. Die ersten Ebenen E₁, in denen die Materiallagen 11 erstreckt sind, verlaufen parallel zu einer Packungsachse h_{P}, also senkrecht zu der Packungsquerschnittsebene Q_{P}. Alternativ können die ersten Ebenen E₁ auch geneigt zu der Packungsquerschnittsebene Q_{P} verlaufen.

Die in Figur 2 gezeigte Materiallage 11 weist analog zu der in Figur 1 gezeigten Materiallage 11 eine Primärstruktur aus Bergen 12 und Tälern 13 auf, die in entlang einer Längserstreckungsrichtung L verlaufen. Die Längserstreckungsrichtung L verläuft unter einem Neigungswinkel θ in Bezug auf die Packungsachse h_{P}., d.h. die Berge 12 und Täler 13 verlaufen schräg in der Ebene zwischen der y-Achse y und der Packungsachse h_{P}. Der Neigungswinkel q beträgt, insbesondere 10° bis 80°. Übliche Neigungswinkel sind z.B. 45° (bei sogenannten y-Typ-Packungen) oder 60° (bei sogenannten x-Typ-Packungen).
Die Packung 10 weist weiterhin eine in Richtung der x-Achse x verlaufende Packungsbreite b_{P} und eine in Richtung der y-Achse y verlaufende Packungstiefe t_{P} auf. Eine Stirnfläche 19 der Packung 10 ist in der Packungsquerschnittsebene Q_{P} erstreckt.

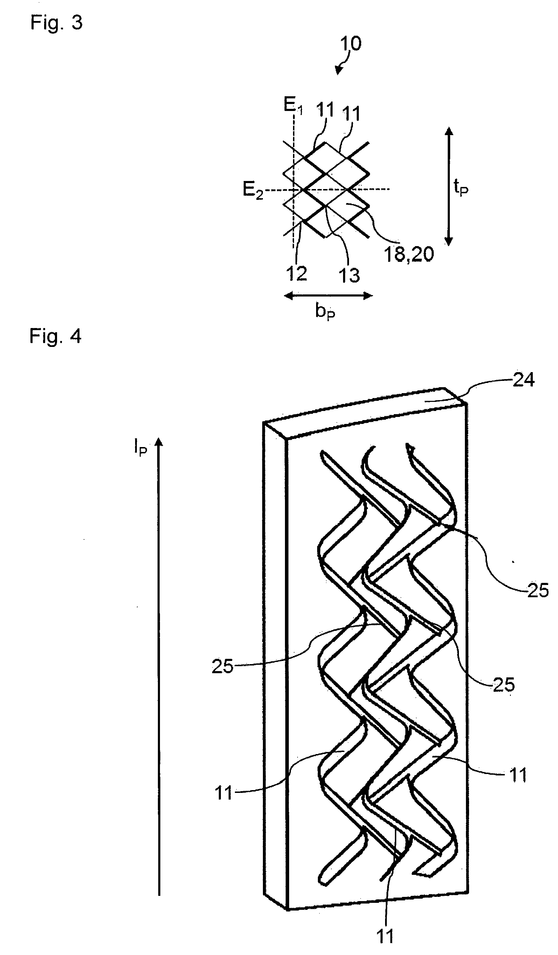

Die Figur 3 zeigt eine Seiten- bzw. Schnittansicht einer erfindungsgemäßen Packung 10 aus vier Materiallagen 11 in der Packungsquerschnittsebene Q_{P} (siehe Figur 2). Die Materiallagen 11 sind derart angeordnet, dass die Berge 12 und Täler 13 der benachbarten Materiallagen 11 jeweils in zweiten Ebenen E₂ verlaufen. In dem hier gezeigten Beispiel liegen jeweils die Berge 12 benachbarter Materiallagen 11 aneinander an und bilden Aussparungen 18 aus, die an der Stirnseite 19 der Packung 10 (siehe Figur 2) entsprechende Öffnungen 20 aufweisen.

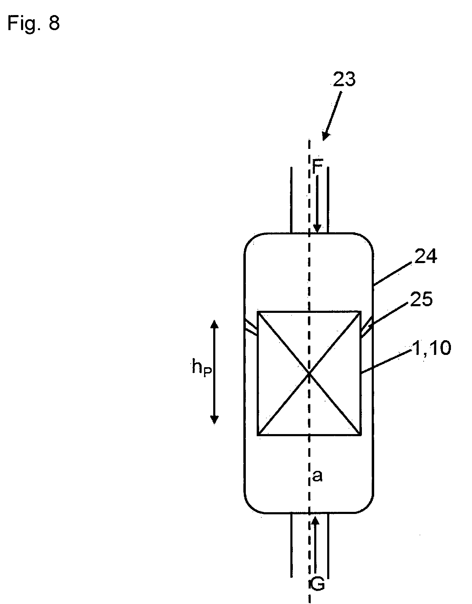

Die Figur 4 zeigt einen Teil einer Wandung eines Mantels 24 einer Kolonne 23 (siehe Figur 8) mit daran anliegenden Materiallagen 11 einer Packung 10. Die Wandung weist 3D-gedruckte Wandungsstrukturen 25, insbesondere Randabstandshalter, auf, welche dazu ausgebildet sind, die durch die Kolonne 23 geleitete Flüssigkeit F von einer Materiallage 11 zu der benachbarten Materiallage 11 zu leiten und dadurch an der Wand fliessende Flüssigkeit wieder zurück in die Packung 10 zu fördern.

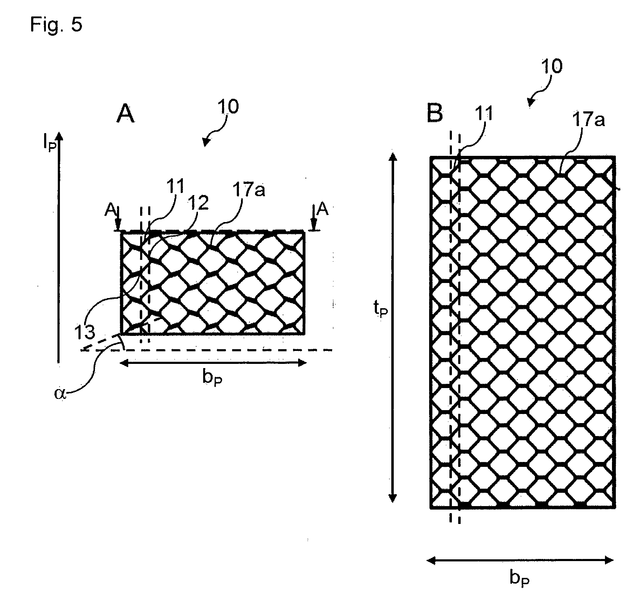

Die Figur 5A zeigt eine Schnittansicht einer erfindungsgemäßen Packung 10 in der Ebene zwischen der Packungsachse I_{P} und der x-Achse (siehe Figur 2), wobei die Materiallagen 11 Abstandsstege 17 aufweisen, die in Bezug auf die Packungsachse I_{P} abwechselnd von Welle zu Welle in entgegengesetzte Richtung um eine jeweilige Neigung α geneigt sind, so dass Flüssigkeit wieder zur Wand gefördert wird. Die Figur 5B zeigt eine entsprechende Schnittdarstellung der Packung 10 entlang der in Figur 5A gezeigten Schnittebene A-A, also in der Packungsquerschnittsebene Q_{P}. Der Verlauf der Materiallagen 11 ist mit gestrichelten Linien angedeutet.

Alternativ zu den Abstandsstegen 17 können an den Stellen, an denen die Wellen (insbesondere die Berge 12) sich berühren und Zwickelflüssigkeit gesammelt wird, Öffnungen in den Materiallagen 11 vorgesehen sein.

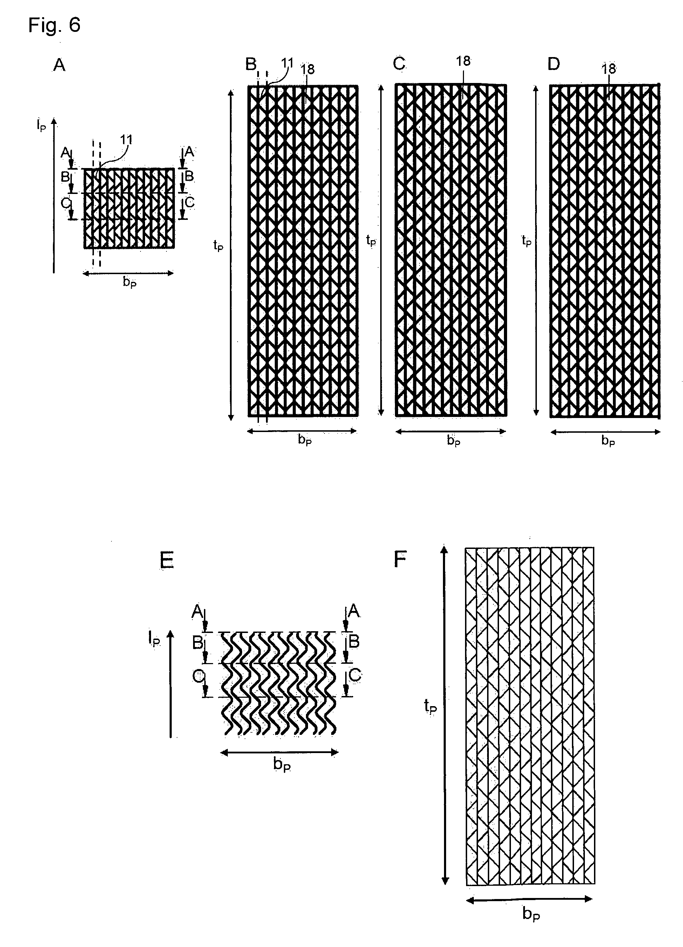

Die Figur 6A zeigt eine Seitenansicht einer erfindungsgemäße Packung 10 in der Ebene zwischen der Packungsachse I_{P} und der x-Achse (siehe Figur 2). Dabei verlaufen die Materiallagen 11 der Packung 10 wie durch gestrichelte Linien angedeutet in der Darstellung von oben nach unten. Aufgrund der schräg zur Bildebene verlaufenden Berge 12 und Täler 13 ergeben sich die vertikalen Linien dabei durch einen entsprechenden Abschnitts eines Bergs 12 oder Tals 13 der Materiallagen. Die Figur 6E zeigt zur besseren Übersicht eine entsprechende Schnittansicht derselben Materiallage 11 in derselben Ebene wie Figur 6A, wobei aufgrund der Schnittansicht nur der äußere Umriss der durch die Berge und Täler 13 gebildeten Wellen sichtbar ist.

Die Figuren 6B bis 6D zeigen entsprechende Darstellungen der Packung 10 entlang der Packungsquerschnittsebene Q_{P}. Dabei zeigt Figur 6B eine Draufsicht, also einen Schnitt entlang der in Fig. 6A gezeigten Schnittebene A-A, Figur 6C zeigt einen Schnitt entlang der in Fig. 6A gezeigten Schnittebene B-B und Fig. 6D zeigt einen Schnitt entlang der in Fig. 6A gezeigten Schnittebene C-C. Der Verlauf der Materiallagen 11 ist exemplarisch in der Fig. 6B mit gestrichelten Linien angedeutet.

Dabei ergeben sich in den verschiedenen Schnittebenen unterschiedliche Muster von Aussparungen 18. Durch die erfindungsgemäß 3D-gedruckte regelmäßige Struktur der Materiallagen 11 liegen insbesondere alle Spitzen (Hochpunkte) der Wellenberge dort, wo sie sich berühren, auf einer senkrecht zu der ersten Ebene E₁ (also senkrecht zu den Materiallagen 11, insbesondere Blechen) verlaufenden Linie, wobei insbesondere der Abstand der Linien gleich dem Wellenabstand (bzw. der Wellenlänge S) ist. Damit ergeben sich zwar wie bei Packungen nach dem Stand der Technik von Ebene zu Ebene Kanäle unterschiedlicher Form. Die Form der Kanäle in einer Ebene ist aber gleich. Figur 6B zeigt die Situation, in der die Wellenspitzen sich berühren, die Figuren 6C und 6D Schnitte darunter.
Durch die geordnete Anordnung der Materiallagen 11, bei der alle Berge 12 bzw.Täler 13 synchron verlaufen, ergibt sich ein geordnetes Muster. Dies ist ein vorteilhafter Unterschied zu den Anordnungen nach dem Stand der Technik, bei denen die Bleche nicht synchron angeordnet sind. Eine entsprechende zu Figur 6B analoge Schnittdarstellung einer Packung 10 nach dem Stand der Technik ist in der Figur 6F gezeigt.

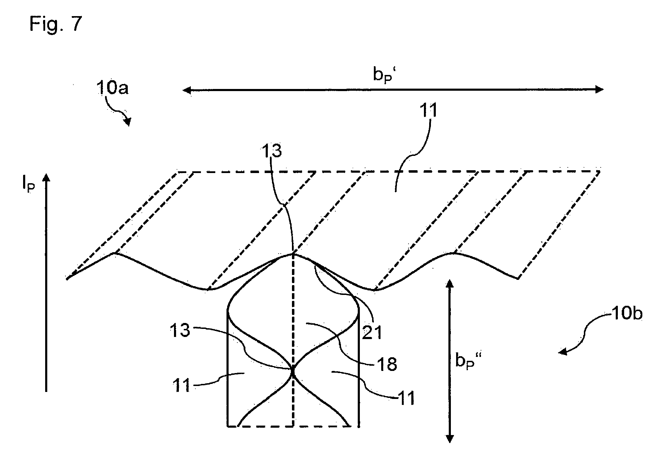

Die Figur 7 zeigt eine perspektivische Darstellung eines Teils einer ersten Packung 10a und einer zweiten Packung 10b an einer Position, an der die erste Packung 10a auf der zweiten Packung 10b aufliegt. Dabei ist, wie bei derartigen Übergängen üblich die Richtung der Packungsbreite b_{P} der ersten Packung 10a senkrecht zu der Richtung der Packungsbreite b_{P} der zweiten Packung 10b angeordnet, d.h. die zweite Packung 10b ist in Bezug auf die erste Packung 10a um 90° in der Packungsquerschnittsebene Q_{P} zueinander gedreht. Die Materiallagen 11 der zweiten Packung 10b sind derart zueinander angeordnet, dass Berge 12 jeweils aneinander anliegen, so dass Aussparungen 18 gebildet werden. Die erste Packung 10a ist insbesondere analog ausgeführt, wobei aus Gründen der Darstellung nur eine Materiallage 11 der ersten Packung 10a gezeigt ist. Z.B. weisen bei dem üblicherweise verwendeten Neigungswinkel der Materiallagen 11 von 45° zur Packungsachse I_{P} die entsprechenden Aussparungen 18 einen Raumwinkel von 90° zueinander auf.

Die Aussparungen 18 (auch Kanäle genannt) sind dabei so ausgestaltet, dass die jeweiligen Öffnungen (auch Eingänge bzw. Ausgänge genannt) der Aussparungen 18 der ersten Packung 10a und der zweiten Packung 10b überlappen, insbesondere deckungsgleich sind. Die Packungen 10a, 10b können also insbesondere so gestaltet sein, dass der Ausgang eines Kanals der ersten Packung 10a mit dem Eingang eines entsprechenden Kanals in der darunter angeordneten zweiten Packung 10b verbunden wird.

In Figur 7 ist eine eckige Umlenkung zwischen den Aussparungen 18 der ersten und zweiten Packungen 10a, 10b gezeigt. Die erfindungsgemäßen 3D-gedruckten Aussparungen 18 können aber auch insbesondere in einem Anschlussabschnitt 21 derart gerundet ausgeführt sein, dass eine runde Umlenkung ausgebildet wird. Es können mittels der 3D-Drucktechnik entsprechende Umlenkungen beliebiger Form hergestellt werden, insbesondere die in der Schrift EP 1275435 A1 beschriebenen Formen und Modifikationen dieser Umlenkungen.

Insbesondere können auch Packungen 10 bzw. gesamte Packungsanordnungen 1 mittels 3D-Druck ohne Spalten zwischen den Lagen (bei einem Wechsel der Orientierung der Kanäle, insbesondere Drehung der benachbarten Packungen um 90° in der Packungsquerschnittsebene Q_{P}) ausgeführt werden.

Die Figur 8 zeigt eine Kolonne 23 zum Energie- und/ oder Stoffaustausch zwischen einer flüssigen Phase F und einer gasförmigen Phase G. Die Kolonne 23 weist eine erfindungsgemäße Packungsanordnung 1 aufweisend eine Mehrzahl von Packungen 10 auf, die jeweils eine Mehrzahl von Materiallagen 11 aufweisen. Die Packungen 10 sind derart in der Kolonne 23 angeordnet, dass die Packungsachse I_{P} parallel zu der Kolonnenachse a verläuft.

Die flüssige Phase F und die gasförmige Phase G werden in der Kolonne 23 z.B. gegenläufig geführt, wobei die flüssige Phase F die Kolonne 23 von oben nach unten durchfließt, und wobei die gasförmige Phase G die Kolonne 23 von unten nach oben durchströmt. Dabei werden die flüssige Phase F und die gasförmige Phase G in den Packungen 10 durchmischt.

Die flüssige Phase F fließt dabei größtenteils entlang der Täler 13 der Materiallagen 11 der Packungen 10, wobei die Materiallagen vollständig benetzt werden, und tritt dabei insbesondere zumindest teilweise durch die an den Bergen 12 und Tälern 13 angeordneten Durchgangsöffnungen 15 hindurch, was zur besseren Verteilung und Vermischung der flüssigen Phase F beiträgt. Die gasförmige Phase G strömt ebenfalls durch die Durchgangsöffnungen 15, was zu einer homogenen Verteilung der gasförmigen Phase G beiträgt.

Die Kolonne 23 weist einen Mantel 24 auf, der einen Mantelraum ausbildet, in dem die Packungsanordnung 1 mit den Packungen 10 angeordnet ist, wobei der Mantel 24 eine Wandung 24 aufweist, die an der dem Mantelraum zugewandten Seite eine 3D-gedruckte Wandungsstruktur 25 aufweist, die dazu ausgebildet ist, die flüssige Phase F von der Wandung 24 zu der mindestens einen Packung 10 zu leiten. Die Wandung des Mantels 24 der Kolonne 23 oder die gesamte Kolonne 23 mit den Packungen 10 kann teilweise oder vollständig 3D-gedruckt sein.

Insbesondere werden dort, wo die Materiallagen 11 (Packungsbleche) die Wandung 24 des Mantels 24 der Kolonne 23 berühren, auf die Wandung 24 Rillen oder Stege gedruckt, die die Flüssigkeit von der herabkommenden, zur Wandung 24 fließenden Welle zu der benachbarten oder darunter liegenden, von der Wand nach unten geneigten Welle hin leitet.

**Bezugszeichenliste**

| | |
|---|---|
| Packungsanordnung | 1 |
| Packung | 10 |
| Erste Packung | 10a |
| Zweite Packung | 10b |
| Materiallage | 11 |
| Berg | 12 |
| Tal | 13 |
| Flanke | 14 |
| Durchgangsöffnung | 15 |
| Sekundärstruktur | 16 |
| Abstandssteg | 17 |
| Aussparung | 18 |
| Stirnfläche | 19 |
| Anschlussabschnitt | 21 |
| Kolonne | 23 |
| Mantel | 24 |
| Wandungsstruktur | 25 |
| Druckposition | 32 |
| Erste Ebene | E₁ |
| Zweite Ebene | E₂ |
| Längserstreckungsrichtung | L |
| Packungsquerschnittsebene | Q_{P} |
| Packungsachse | I_{P} |
| Packungsbreite | b_{P} |
| Packungstiefe | t_{P} |
| x-Achse | x |
| y-Achse | y |
| Flächennormale | n |
| Kolonnenachse | a |
| Flüssige Phase | F |
| Gasförmige Phase | G |
| Neigungswinkel | θ |
| Wellenwinkel | λ |
| Neigung | α |
| Stegneigung | β |

## Patentansprüche

1. Packung (10) aufweisend eine Mehrzahl von parallel angeordneten Materiallagen (11), die sich jeweils entlang einer ersten Ebene (E₁) erstrecken, wobei die Packung (10) eine Packungsachse (I_{P}) und eine senkrecht zu der Packungsachse (I_{P}) angeordnete Packungsquerschnittsebene (Q_{P}) aufweist, und wobei die Materiallagen (11) derart angeordnet sind, dass die ersten Ebenen (E₁), entlang derer sich die Materiallagen (11) erstrecken, jeweils parallel zu der Packungsachse (I_{P}) angeordnet sind, oder eine Neigung (α) bezüglich der Packungsquerschnittsebene (Q_{P}) aufweisen, und wobei die jeweilige Materiallage (11) eine Mehrzahl von alternierend angeordneten Bergen (12) und Tälern (13) aufweist, wobei jeweils ein Berg (12) mit einem benachbarten Tal (13) über eine Flanke (14) verbunden ist, und wobei die Berge (12) und Täler (13) jeweils entlang einer Längserstreckungsrichtung (L) verlaufen, und wobei die Packung (10) eine parallel zu der Packungsquerschnittsebene (Q_{P}) und senkrecht zu der Längserstreckungsrichtung (L) verlaufende Packungsbreite (b_{P}) aufweist, und wobei die Packung (10) eine in der Packungsquerschnittsebene (Q_{P}) angeordnete Stirnfläche (19) aufweist, und wobei die Packung (10) dazu ausgebildet ist, derart in einer Kolonne (23) zum Stoff- und oder Energieaustausch zwischen einer flüssigen Phase (F) und einer gasförmigen Phase (G) angeordnet zu werden, dass die Packungsachse (I_{P}) entlang einer Kolonnenachse (a) verläuft, und wobei die Oberflächen der Materiallagen (11) eine Sekundärstruktur (16) aus Vertiefungen und/ oder Erhebungen aufweisen,
**dadurch gekennzeichnet, dass**
die Materiallagen (11) durch 3D-Drucken gebildet sind, wobei die Berge (12), die Täler (13) und die Sekundärstruktur (16) durch das 3D-Drucken gebildet sind.

2. Packung (10) nach Anspruch 1, **dadurch gekennzeichnet, dass** die Sekundärstruktur (16) durch eine mittels des 3D-Drucks erzeugte Rauigkeit oder Unebenheit der Oberfläche der Materiallagen (11) ausgebildet ist.

3. Packung (10) nach Anspruch 1, **dadurch gekennzeichnet, dass** die Sekundärstruktur (16) durch Leitrinnen in Form eines Fischgrätmusters ausgebildet ist, wobei die Spitzen der Dreiecke des Fischgrätmusters an den Tälern (13) angeordnet sind.

4. Packung (10) nach einem der vorhergehenden Ansprüche, **dadurch gekennzeichnet, dass** ein zwischen der Längserstreckungsrichtung (L) der Berge (12) und Täler (13) und der Packungsachse (I_{P}) gebildeter Neigungswinkel (θ) eine maximale Abweichung von 0,2°, insbesondere 0,1°, von einem Sollwert aufweist, wobei der Sollwert insbesondere 45° beträgt.

5. Packung (10) nach einem der vorhergehenden Ansprüche, **dadurch gekennzeichnet, dass** das Lückenvolumen der Packung (10) eine maximale Abweichung von 0,22 %, insbesondere 0,11 %, von einem Sollwert aufweist, wobei der Sollwert insbesondere 95% bis 98% beträgt.

6. Packung (10) nach einem der vorhergehenden Ansprüche, **dadurch gekennzeichnet, dass** die Packung (10) durch 3D-Drucken einer Mehrzahl stoffschlüssig miteinander verbundener Materiallagen (11) gebildet ist, wobei die Materiallagen (11) insbesondere mittels mindestens eines Abstandsstegs (17) verbunden sind.

7. Packung (10) nach einem der vorhergehenden Ansprüche, **dadurch gekennzeichnet, dass** der Abstand der Materiallagen (11) entlang der gemeinsamen Flächennormalen (n) eine maximale Abweichung von 1% aufweist.

8. Packung (10) nach einem der vorhergehenden Ansprüche, **dadurch gekennzeichnet, dass** die Materiallagen (11) derart angeordnet sind, dass die Berge (12) und Täler (13) der benachbarten Materiallagen (11) jeweils in senkrecht zu den ersten Ebenen (E₁) angeordneten zweiten Ebenen (E₂) angeordnet sind.

9. Packung (10) nach einem der vorhergehenden Ansprüche, **dadurch gekennzeichnet, dass** die Berge (12) benachbarter Materiallagen (11) aneinander anliegen, so dass die Packung (10) zwischen den benachbarten Materiallagen (11) in der Längserstreckungsrichtung (L) verlaufende Aussparungen (18) aufweist, und wobei die Stirnfläche (19) eine Mehrzahl von Öffnungen der besagten Aussparungen (18) aufweist.

10. Packung (10) nach Anspruch 9, **dadurch gekennzeichnet, dass** die Materiallagen (11) jeweils mindestens eine Durchgangsöffnung (15) aufweisen, wobei die mindestens eine Durchgangsöffnung (15) an einem Berg (12) angeordnet ist.

11. Packung (10) nach Anspruch 9 oder 10, **dadurch gekennzeichnet, dass** die Materiallagen (11) jeweils mindestens einen Abstandssteg (17) aufweisen, wobei benachbarte Materiallagen (11) mittels des Abstandsstegs (17) verbunden sind, und wobei der mindestens eine Abstandssteg (17) an einem Berg (12) angeordnet ist.

12. Packung (10) nach Anspruch 11, **dadurch gekennzeichnet, dass** mindestens eine Abstandssteg (17) eine Stegneigung (β) in Bezug auf die Packungsquerschnittsebene (Q_{P}) aufweist.

13. Packung (10) nach einem der Ansprüche 9 bis 12, **dadurch gekennzeichnet, dass** die Packung (10) an mindestens einer Stirnfläche (19) einen Anschlussabschnitt (21) aufweist, der einen Teilabschnitt der besagten Aussparungen (18) aufweist, und der die besagten Öffnungen aufweist, wobei der Querschnitt der Aussparungen (18) in dem Anschlussabschnitt (21) erweitert ist.

14. Packungsanordnung (1) aufweisend mindestens eine erste Packung (10a) nach einem der Ansprüche 9 bis 13 und eine zweite Packung (10b) nach einem der Ansprüche 9 bis 13, **dadurch gekennzeichnet, dass** die Öffnungen der Stirnfläche (19) der ersten Packung (10a) mit den Öffnungen der Stirnfläche (19) der zweiten Packung (10b) überlappen, insbesondere zur Deckung gebracht sind, wobei die Stirnflächen (19) der ersten und zweiten Packungen (10a,10b) derart aneinander anliegen, dass die Richtung der Packungsbreite (b_{P}) der ersten Packung (10a) senkrecht zu der Richtung der Packungsbreite (b_{P}) der zweiten Packung (10b) angeordnet ist.

15. Kolonne (23) zum Stoff- und oder Energieaustausch zwischen einer flüssigen Phase (F) und einer gasförmigen Phase (G) aufweisend mindestens eine Packung (10) nach einem der Ansprüche 1 bis 13, wobei die Kolonne (23) eine Kolonnenachse (a) aufweist, und wobei die Packungsachse (I_{P}) der mindestens einen Packung (10) entlang der Kolonnenachse (a) verläuft, und wobei die Kolonne (23) weiterhin einen Mantel (24) aufweist, der einen Mantelraum ausbildet, in dem die mindestens eine Packung (10) angeordnet ist, **dadurch gekennzeichnet, dass** der Mantel (24) eine Wandung (24) aufweist, die an der dem Mantelraum zugewandten Seite eine 3D-gedruckte Wandungsstruktur (25), insbesondere einen Randabweiser, aufweist, die dazu ausgebildet ist, die flüssige Phase (F) von der Wandung (24) zu der mindestens einen Packung (10) zu leiten.

16. Verfahren zur Herstellung einer Packung (10) nach einem der Ansprüche 1 bis 13, wobei die Materiallagen (11) mittels eines 3D-Druckverfahrens gedruckt werden, und wobei die Berge (12), die Täler (13) und die Sekundärstruktur (16) mittels des 3D-Druckverfahrens gedruckt werden.

17. Verfahren zum Stoff- und/ oder Energieaustausch zwischen einer flüssigen Phase (F) und einer gasförmigen Phase (G), insbesondere mittels einer Kolonne (23) nach Anspruch 15, wobei die flüssige Phase (F) und die gasförmige Phase (G) im Gegenstrom durch mindestens eine Packung (10) nach einem der Ansprüche 1 bis 13 geleitet werden, und wobei die mindestens eine Packung (10) insbesondere Teil einer Packungsanordnung (1) nach Anspruch 14 ist.
